# EUROPÄISCHE PATENTSCHRIFT

(11) **EP 3 365 638 B1**
(45) Veröffentlichungstag und Bekanntmachung des Hinweises auf die Patenterteilung: **02.06.2021**
(21) Anmeldenummer: 16763507.7
(22) Anmeldetag: 08.09.2016
(51) Int. Cl.: G01F 1/684, G01F 15/14

(54) **THERMISCHES DURCHFLUSSMESSGERÄT UND ANORDNUNG MIT EINEM ROHR UND DEM THERMISCHEN DURCHFLUSSMESSGERÄT**
THERMAL FLOW METER AND ASSEMBLY CONSISTING OF A PIPE AND THE THERMAL FLOW METER
DÉBITMÈTRE THERMIQUE ET ARRANGEMENT COMPRENANT UN TUYAU ET LE DÉBITMÈTRE THERMIQUE

(30) Priorität: 23.10.2015 DE 102015118120
(43) Veröffentlichungstag der Anmeldung: 29.08.2018
(73) Patentinhaber: Endress+Hauser Flowtec AG, 4153 Reinach (CH)
(72) Erfinder: BARTH, Martin, 4125 Riehen (CH); GRÜN, Alexander, 79539 Lörrach (DE); PAPADOPOULOU, Ermioni, 4143 Dornach (CH); PFAU, Axel, 79664 Wehr (DE)
(74) Vertreter: Andres, Angelika Maria
(86) Internationale Anmeldenummer: PCT/EP2016/071201
(87) Internationale Veröffentlichungsnummer: WO 2017/067699

(56) Entgegenhaltungen:
- DE-U1- 20 309 694
- US-A1- 2005 241 386
- US-A1- 2009 260 431
- US-A1- 2011 048 564
- US-A1- 2011 098 943
- US-A1- 2015 192 442

## Beschreibung

Die vorliegende Erfindung betrifft ein thermisches Durchflussmessgerät nach dem Oberbegriff des Anspruchs 1 und eine Anordnung mit einem Rohr und dem thermischen Durchflussmessgerät.

Es sind thermische Durchflussmessgeräte bekannt, welche Sensorgehäuse mit zwei Stifthülsen aufweisen. In einer ersten dieser zwei Stifthülsen ist ein Heizer, z.B. ein beheiztes Widerstandsthermometer, angeordnet. In einer zweiten dieser Stifthülsen ist ein Temperatursensor zur Ermittlung der Mediumstemperatur angeordnet, welcher ebenfalls als beheizbares Widerstandsthermometer ausgebildet sein kann, welches allerdings in seinem Betriebszustand als Temperatursensor nicht aktiv beheizt wird. Mittels dieser beiden vorbeschriebenen Sensorelemente kann eine zuverlässige Durchflussmessung erfolgen.

Zur Vermeidung von Messfehlern wird empfohlen das thermische Durchflussmessgerät so in einem Rohr zu installieren, dass die Strömung des Messmediums bzw. die Strömungsrichtung senkrecht, also in einem Winkel von 90°, zu einer Verbindungsachse steht, welche durch die beiden Stifthülsen definiert wird. Daher muss das thermische Durchflussmessgerätes bislang sehr präzise ausgerichtet werden, um einen Winkelversatz der Strömungsrichtung gegenüber dieser idealen 90°-Anordnung zu meiden. Dieser Messfehler aufgrund eines Winkelversatzes ist auch als Drehwinkelempfindlichkeit eines thermischen Durchflussmessgerätes bekannt.

Zur Verringerung dieser Drehwinkelempfindlichkeit wurden konstruktive Maßnahmen getroffen, welche in dem Produkt t-mass 65 l der Anmelderin realisiert wurden. Bei dieser Konstruktion muss allerdings die Einbaulage beachtet werden. Das Durchflussmessgerät ermittelt zuverlässig den Durchfluss eines Messmediums aus einer ersten Strömungsrichtung und kann einen Winkelversatz ausgleichen. Es kann allerdings Situationen geben, z.B. CIP-Reinigungsprozesse, Rückstöße des Messmediums oder eine gesteuerte Durchleitung des Messmediums in Gegenrichtung, welche eine Durchflussmessung in einer der ersten Strömungsrichtung entgegengesetzten zweiten Strömungsrichtung notwendig machen. Die Eigenschaft eines thermischen Durchflussmessgerätes, in Strömungsrichtung und Gegenrichtung zu messen, wird nachfolgend als Bidirektionalität bezeichnet.

Ein thermisches Durchflussmessgerät ist zudem aus der US 2015/0192442 A1 bekannt. Hier sind zusätzlich zu den Stifthülsen in Fig. 1b und 2a zwei seitliche längliche Elemente vorgesehen, welche eine Strömungsführung bewirken. Allerdings wird aufgrund des geradflächigen Verlaufs der länglichen parallel zur Strömungsrichtung die Drehwinkelempfindlichkeit des Durchflussmessgerätes nur gering verbessert.

Eine thermisches Durchflussmessgerät, welches eine in Strömungsrichtung nach dem Heizer und Temperatursensor angeordnete Anordnung von Wänden aufweist, die als Strömungskonditionierer eingerichtet ist, wird bereits in der US 2011/0048564 A1 gelehrt. Derartige Anordnungen sind jedoch nicht für einen bidirektionalen Betrieb des Durchflussmessgerätes geeignet. Des Weiteren schweigt die US 2011/0048564 A1 bezüglich des Einflusses der Anordnung auf die Drehwinkelempfindlichkeit.

Ausgehend vom vorgenannten Stand der Technik ist es nunmehr Aufgabe der vorliegenden Erfindung ein bidirektionales thermisches Durchflussmessgerät mit geringerer Drehwinkelempfindlichkeit bereitzustellen.

Die vorliegende Erfindung löst diese Aufgabe durch ein thermisches Durchflussmessgerät mit den Merkmalen des Anspruchs 1.

Ein erfindungsgemäßes thermisches Durchflussmessgerät umfasst einen Sensor mit einem metallischen Sensorgehäuse.

Das metallische Sensorgehäuse weist einen Hohlkörper zum Anschluss an eine Einsteckvorrichtung und/oder eine Rohrwandung auf. Eine Einsteckvorrichtung kann z.B. ein Gestänge sein, an dessen Ende das vorgenannte Sensorgehäuse angeordnet ist. Dieses Gestänge wird sodann durch eine Öffnung, die zumeist im Schwerefeld am obersten Punkt eines Rohres angeordnet ist, in das Rohr eingeführt. Die zur Umwelt begrenzende Wandung des Sensorgehäuses ist somit teilweise oder vollständig einer im Rohr befindlichen Strömung eines Messmediums ausgesetzt. Alternativ zur Einsteckvorrichtung kann das metallische Sensorgehäuse auch direkt oder mittels einer Rohrverlängerung fest an einer Rohrwandung fixiert sein. Die Art der Festlegung des Sensorgehäuses bzw. des Hohlkörpers ist im Rahmen der vorliegenden Erfindung jedoch nur von nachrangiger Bedeutung.

Der vorgenannte Hohlkörper weist eine Grundfläche auf. Diese Grundfläche kann beispielsweise eben oder gewölbt ausgebildet sein.

Das Sensorgehäuse weist zumindest zwei Stifthülsen auf, welche ausgehend von der Grundfläche hervorstehen und im eingebauten Zustand vorzugsweise in den Innenbereich eines Rohres hineinragen. Die Stifthülsen können z.B. zylindrisch oder prismatisch ausgebildet sein.

Die Stifthülsen definieren eine Verbindungsachse, auf welcher die Längsachsen der beiden Stifthülsen angeordnet sind. Auf der Mitte zwischen den beiden Längsachsen der Stifthülsen ist der Mittelpunkt auf der Verbindungsachse angeordnet.

In der ersten Stifthülse, insbesondere in einem endständigen Abschnitt dieser Stifthülse, ist ein erster Heizer angeordnet und in der zweiten Stifthülse, insbesondere in einem endständigen Abschnitt dieser Stifthülse, ist ein Temperatursensor zur Ermittlung der Mediumstemperatur angeordnet.

Weiterhin weist das Sensorgehäuse zumindest zwei längliche Elemente mit zumindest derselben Länge wie die Stifthülsen auf. Diese verlaufen ausgehend vom Hohlkörper parallel zu den beiden Stifthülsen.

Auf einer fiktiven Schnittebene verläuft senkrecht zur Sensorachse A und senkrecht zur fiktiven Verbindungsachse I eine weitere fiktive Achse II.

Zur Verringerung der Drehwinkelempfindlichkeit verringert sich erfindungsgemäß der Abstand der länglichen Elemente zumindest bereichsweise in ihrem Verlauf parallel zu der vorgenannten weiteren Achse II. Durch die Abstandsverringerung der länglichen Elemente erfolgt eine Zentrierung der Strömung. Diese Zentrierung kann einen Winkelversatz ausgleichen.

Weiterhin erfindungsgemäß weist das Sensorgehäuse auf der Schnittebene zwei Ebenen auf, gegenüber welchen das Sensorgehäuse zumindest bereichsweise spiegelsymmetrisch aufgebaut ist. Die beiden Ebenen sind senkrecht zueinander und senkrecht zur Schnittebene angeordnet. Durch die spiegelsymmetrischen Aufbau des Sensorgehäuses bezogen auf die zwei vorgenannten Ebenen kann eine bidirektionale Durchflussmessung, also das Erfassen eines Durchflusses sowohl in einer ersten Strömungsrichtung und in einer entgegengesetzten zweiten Strömungsrichtung erfolgen.

Eine spiegelsymmetrische Anordnung kann im Rahmen der vorliegenden Erfindung beispielsweise durch vier längliche Elemente erzielt werden, von welchen zwei längliche Element in Strömungsrichtung vor und zwei längliche Elemente in Strömungsrichtung hinter den Stifthülsen angeordnet sind.

Eine wesentliche konstruktive Vereinfachung und eine Materialeinsparung wird erfindungsgemäß gegenüber der Anordnung aus vier länglichen Elementen erreicht, indem zwei längliche Elemente jeweils in entgegengesetzter Richtung zum Mittelpunkt auf der Verbindungsachse l angeordnet sind und einen größeren Abstand zum Mittelpunkt der beiden Stifthülsen aufweisen als die jeweilige Stifthülse und wobei sich der Abstand der länglichen Elemente in ihrem Verlauf parallel zur Achse II zur Verbindungsachse l hin verringert. Dadurch erfolgt eine Zentrierung der Strömung mit lediglich zwei Elementen.

Eine vorteilhafte Robustheit des Sensors und eine Verringerung der Vibrationsanfälligkeit der Durchflussmessung kann erreicht werden, sofern die Dicke der länglichen Elemente in ihrem Verlauf auf der Schnittebene parallel Achse II zur Verbindungsachse hinzunimmt. Die Zunahme der Dicke kann vorzugsweise zumindest 20% betragen.

Für eine optimale Zentrierung der Strömung auf den Bereich der beiden Stifthülsen ist es von Vorteil, wenn der Abstand zweier Anfangspunkte der beiden länglichen Elemente auf einer zur Verbindungsachse parallel verlaufenden Verbindungslinie, zumindest 30%, vorzugsweise 50%-120%, größer ist als der Minimalabstand zweier Punkte der länglichen Elemente.

In einer besonderen Ausführungsvariante der Erfindung sind die zwei Punkte, welche den Minimalabstand definieren, auf der Verbindungsachse I angeordnet sind. Durchflussmessgeräte können an vibrierenden Rohren befestigt werden. Um die Eigenschwingung des Sensorgehäuses zu verbessern und eine größere Robustheit des Sensors z.B. vor dem Verbiegen einzelner Sensorelemente zu gewährleisten ist es von Vorteil, wenn die länglichen Elemente über ein Verbindungselement miteinander verbunden sind.

Besonders vorteilhaft kann dabei die Gesamtheit aus den zumindest zwei länglichen Elementen und dem Verbindungselement einen Bügel ausbilden, welcher die beiden Stifthülsen überbrückt. Dadurch werden die Stifthülsen eingefasst und zusätzlich geschützt. Bei der Verwendung von Bügeln kann der Verdacht naheliegen, dass es vermehrt zu Strömungsturbulenzen kommt, welche die Messung beeinflussen. Dies konnte allerdings bei der Erprobung des Sensorgehäuses nicht bestätigt werden.

Das Verbindungselement kann zudem einen Vorsprung aufweisen, zur Ableitung von Tröpfchen von der Oberfläche der Stifthülse. Dies ist besonders von Vorteil bei der Verwendung eines thermischen Durchflussmessgerätes bei der Durchflussmessung von Dämpfen oder Gasen, welche Flüssigkeitstropfen im Gasstrom mitführen.

Ein entsprechendes längliches Element kann vorteilhaft in einem Abstand von der nächstgelegenen Stifthülse beabstandet sein, welcher zumindest 10% des Abstandes der Stifthülsen voneinander entspricht.

Das erfindungsgemäße Durchflussmessgerät bedarf aufgrund seines Aufbaus zur bidirektionalen Durchflussmessung lediglich einer Kalibration aus einer Strömungsrichtung.

Eine erfindungsgemäße Anordnung umfasst ein thermisches Durchflussmessgerät nach einem der vorhergehenden Ansprüche und ein Rohr, welches von einem Messmedium in einer ersten Strömungsrichtung durchflossen wird, wobei das Sensorgehäuse des thermischen Durchflussmessgerätes im Rohr angeordnet ist und wobei das thermische Durchflussmessgerät eine Auswerteeinrichtung aufweist, welche ausgerüstet ist zum Erfassen des Durchfluss des Messmediums in der ersten Strömungsrichtung und in einer der ersten Strömungsrichtung entgegengesetzten zweiten Strömungsrichtung.

In Kombination mit einer Richtungserkennung kann eine Durchfluss-Bilanzierung des Mediums in Hin- und Rückrichtung erfolgen. Daher ist es von Vorteil, wenn das Durchflussmessgerät ein Strömungshindernis und eine dritte Stifthülse mit einem zweiten Heizer aufweist, welche derart angeordnet sind, dass eine Richtungserkennung des Messmediums erfolgen kann. Dabei befindet sich die dritte Stifthülse vorzugsweise teilweise oder vollständig im Strömungsschatten des Strömungshindernisses.

Dabei kann das Strömungshindernis beispielsweise ein ebener Steg oder auch eine zylindrisch oder prismatisch ausgebildete Stifthülse sein. Als Strömungsschatten ist ein abgelöster Nachlaufbereich und/oder ein Rezirkulationsbereich zu verstehen. Innerhalb dieses Bereichs kann der Heizer angeordnet sein, wenn der Sensor aus einer ersten Strömungsrichtung angeströmt wird.

Weitere vorteilhafte Ausgestaltungen des Durchflussmessgerätes und insbesondere des Sensorgehäuses werden nachfolgend erörtert.

Die jeweilige Stifthülse kann vorteilhaft einen weiteren Abschnitt aufweisen, welcher vorzugsweise in die Grundfläche übergeht, mit einer Mantelfläche die einen maximalen Abstand zur Längsachse d2 aufweist. Bei einer kegelstumpfförmigen Mantelfläche entspricht der maximale Abstand dem größten Radius der Mantelfläche, welcher üblicherweise zugleich die fiktive Grundfläche des Kegelstumpfes bildet. Diese Grundfläche ist selbstverständlich nicht existent, da die Hülse des Sensorgehäuses als durchgehend hohl zu verstehen ist, so dass ein Temperatursensor bei der Montage des thermischen Durchflussmessgerätes über den Hohlkörper und eine endständige Öffnung der Stifthülse in diese Stifthülse einführbar und bis in den ersten Abschnitt durchführbar ist bzw. eingefädelt werden kann.

Der erste Abschnitt kann vorteilhaft als eine zylindrische Mantelfläche aufweisen. Dadurch kann, verglichen zu einer kegelförmigen Mantelfläche, eine besonders gute Anbindung eines Heizers und eines Temperatur an die Innenwandung der Stifthülse erfolgen. Die Anbindung kann bevorzugt durch eine Kupferbrücke erfolgen, wie dies beispielsweise DE 10 2008 015 359 A1 beschrieben wird.

Damit die einzelnen Sensorelemente besonders gut thermisch entkoppelt sind und auch nur geringe Strömungsverwirbelungen erzeugen, ist es von Vorteil, wenn der maximale Innendurchmesser des ersten Abschnitts kleiner oder gleich 4 mm, vorzugsweise kleiner oder gleich 3 mm, ist. Gerade bei diesen geringen Durchmessern treten bei nicht-gestuften Stifthülsen jedoch tiefereEigenfrequenzen auf. Diesen Eigenfrequenzen werden durch die gestufte Form der erfindungsgemäßen Stiftröhrchen vorteilhaft heraufgesetzt.

Jede der Stifthülsen weist vorteilhaft jeweils einen endständigen Abschnitt mit einer mediumsberührenden Stirnfläche auf. In der ersten Stifthülse, insbesondere in dem endständigen Abschnitt dieser Stifthülse, ist ein Heizer angeordnet und in der zweiten Stifthülse, insbesondere in dem endständigen Abschnitt dieser Stifthülse, ist ein Temperatursensor zur Ermittlung der Mediumstemperatur angeordnet. Freilich können auch ein weiterer Heizer und/oder ein weiterer Temperatursensoren einer jeweiligen Stifthülse angeordnet sein. Der Heizer und der Temperatursensor dienen typischerweise der Durchflussmessung.

Es ist von Vorteil, wenn der weitere Abschnitt der Stifthülse eine kegelstumpfförmige Mantelfläche aufweist. Durch die kegelförmige Ausgestaltung des zum Hohlkörper hin angeordneten Abschnitts wird zusätzlich die Eigenfrequenz der Stifthülse erhöht.

Es ist von Vorteil, wenn jede der Stifthülsen zumindest in dem endständigen Abschnitt eine Wandstärke von weniger als 0,5 mm, vorzugsweise zwischen 0,1-0,4 mm, aufweist. Die geringe Wandstärke ermöglicht eine sehr direkte und schnelle Wärmeübertragung an das Messmedium. Dadurch werden schnelle Ansprechzeiten des Sensors bei Änderung der Strömungsgeschwindigkeit des Messmediums ermöglicht, allerdings erhöht sich bei dünnen Stifthülsen auch zusätzlich die Eigenfrequenz der Stifthülse und des Sensorgehäuses insgesamt. Dies wird durch die gestufte Form der erfindungsgemäßen Stifthülse jedoch kompensiert.

Die Wandstärke variiert vorteilhaft zumindest im Bereich des endständigen Abschnitts um weniger als 20%, vorzugsweise um weniger als 10%. Dadurch wird eine möglichst gleichmäßige Wärmeverteilung entlang der Stifthülse erreicht.

Für eine Druckstabilität und chemische Stabilität ist es von Vorteil, wenn das Sensorgehäuse aus Stahl und/oder Titan und/oder Hastalloy besteht.

Das metallische Sensorgehäuse kann einstückig ausgebildet sein und die Stifthülsen und der Hohlkörper können nahtfrei, insbesondere schweißnahtfrei, miteinander verbunden sein, wobei das Sensorgehäuse besonders bevorzugt als ein monolithisches Bauteil ausgebildet ist. Nahtfrei bedeutet im Kontext der vorliegenden Erfindung, dass weder eine Schweißnaht noch eine Klebe- oder Lötnaht als Verbindung zwischen den Stifthülsen und dem Hohlkörper vorhanden ist. Bei verschweißten Stifthülsen ändern sich die Wärmeübergänge mit der Temperatur, was bei einem größeren Temperaturwechsel zu einem Messfehler führen kann, dies wird bei dieser Ausführungsvariante jedoch vorteilhaft vermieden.

Es ist insbesondere von Vorteil, wenn das metallische Sensorgehäuse als ein monolithisches Bauteil ausgebildet ist. Das bedeutet, dass das Sensorgehäuse aus komplett einem Material gefertigt ist. Zwar sind durch generative Fertigungsverfahren auch Kombinationen aus mehreren Metallen oder Metalllegierungen, z.B. Stahl und Titan, realisierbar, diese sind jedoch nicht bevorzugt.

Es ist von Vorteil, wenn zumindest der endständige Abschnitt der Stifthülse eine zylindrische Mantelfläche aufweist mit einem Durchmesser und dass sich der endständige Abschnitt über eine Länge erstreckt, wobei das Verhältnis größer oder gleich fünf, vorzugsweise größer oder gleich sieben, ist.

Um das thermische Durchflussmessgerät um weitere Funktionalitäten, z.B. Sensordrifterkennung und/oder Richtungserkennung, zu ergänzen, weist das Sensorgehäuse vorteilhaft zumindest eine dritte Stifthülse und/oder ein Strömungshindernis auf, welche vorzugsweise parallel zur ersten und/oder zweiten Stifthülse verlaufen.

Zur Minderung der Eigenfrequenz ist es von Vorteil, wenn die dritte Stifthülse eine Längsachse und eine endständige Stirnfläche aufweist, wobei die dritte Stifthülse einen ersten Abschnitt aufweist mit der Stirnfläche und einer Mantelfläche, wobei die Mantelfläche einen maximalen Abstand zur Längsachse d1 aufweist, und dass die Stirnfläche einen weiteren Abschnitt aufweist, welcher in die Grundfläche übergeht, mit einer Mantelfläche die einen maximalen Abstand zur Längsachse d2 aufweist, wobei der maximale Abstand d2 der Mantelfläche des weiteren Abschnitts zumindest 20%, vorzugsweise zumindest 50%, größer ist als der maximale Abstand d1 der Mantelfläche des ersten Abschnitts zur Längsachse der Stifthülse hin.

Die Länge des endständigen Abschnitts kann vorteilhaft zumindest 2 mm, vorzugsweise 3-10 mm, und die Gesamtlänge einer Stifthülse zumindest 10 mm betragen.

Das Sensorgehäuse des erfindungsgemäßen Durchflussmessgerätes kann vorteilhaft mittels eines generativen Fertigungsverfahrens, vorzugsweise mittels eines Strahlschmelzverfahrens hergestellt werden. Zwar sind entsprechende Sensorgehäuse auch über andere Fertigungsverfahren, so z.B. durch Urformverfahren, insbesondere durch das Metal Injection Molding realisierbar, allerdings hat sich gezeigt, dass besonders gute Fertigungstoleranzen und besonders dünnwandige Bauteile mit den vorgenannten bevorzugten Fertigungsverfahren erreichbar sind.

Nachfolgend wird die Erfindung anhand eines Ausführungsbeispiels und unter Zuhilfenahme der beigefügten Zeichnungen näher erläutert. Diese Beschreibung und die Figuren sind exemplarisch zu verstehen und in keinster Weise einschränkend für den Schutzbereich der vorliegenden Erfindung. Es zeigen:
- Fig. 1: Perspektivdarstellung einer ersten Ausführungsvariante eines Sensorgehäuses eines erfindungsgemäßen thermischen Durchflussmessgeräts;
- Fig. 2: Schnittansicht des Sensorgehäuses der Fig. 1;
- Fig. 2a: geschnittene Draufsicht des Sensorgehäuses der Fig. 1.
- Fig. 3: Schnittansicht einer zweiten Ausführungsvariante eines Sensorgehäuses mit einer Schnittebene senkrecht zur Längsachse des Sensorgehäuses;
- Fig. 4: Schnittansicht einer dritten Ausführungsvariante eines Sensorgehäuses mit einer Schnittebene senkrecht zur Längsachse des Sensorgehäuses;
- Fig. 5: Schnittansicht einer vierten Ausführungsvariante eines Sensorgehäuses mit einer Schnittebene senkrecht zur Längsachse des Sensorgehäuses;
- Fig. 6: Schnittansicht einer fünften Ausführungsvariante eines Sensorgehäuses mit einer Schnittebene senkrecht zur Längsachse des Sensorgehäuses;
- Fig. 7: Längsschnitt einer sechsten Ausführungsvariante eines Sensorgehäuses eines erfindungsgemäßen Durchflussmessgerätes;
- Fig. 8: Längsschnitt einer siebenten Ausführungsvariante eines Sensorgehäuses eines erfindungsgemäßen Durchflussmessgerätes;
- Fig. 9: Längsschnitt einer achten Ausführungsvariante eines Sensorgehäuses eines erfindungsgemäßen Durchflussmessgerätes und
- Fig. 10: Längsschnitt einer neunten Ausführungsvariante eines erfindungsgemäßen Durchflussmessgerätes

Herkömmliche thermische Durchflussmessgeräte verwenden üblicherweise zwei möglichst gleichartig ausgestaltete beheizbare Widerstandsthermometer, die in, meist stiftförmigen Metallhülsen, sog. Stingers oder Prongs oder in zylindrischen Metallhülsen angeordnet sind und die in thermischem Kontakt mit dem durch ein Messrohr oder durch die Rohrleitung strömenden Medium sind. Für die industrielle Anwendung sind beide Widerstandsthermometer üblicherweise in ein Messrohr eingebaut; die Widerstandsthermometer können aber auch direkt in der Rohrleitung montiert sein. Einer der beiden Widerstandsthermometer ist ein sogenanntes aktives Sensorelement, der mittels einer Heizeinheit beheizt wird. Als Heizeinheit ist entweder eine zusätzliche Widerstandsheizung vorgesehen, oder bei dem Widerstandsthermometer selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Im Bereich der thermischen Durchflussmessung wird das aktive Sensorelement auch oft Heizer genannt. Bei dem zweiten Widerstandsthermometer handelt es sich um ein sog. passives Sensorelement: Es misst die Temperatur des Mediums.

Üblicherweise wird in einem thermischen Durchflussmessgerät ein beheizbares Widerstandsthermometer so beheizt, dass sich eine feste Temperaturdifferenz zwischen den beiden Widerstandsthermometer einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Widerstandsthermometers wesentlich von dem Massedurchfluss des vorbeiströmenden Mediums abhängig. Da das Medium kälter ist als das beheizte Widerstandsthermometer, wird durch das vorbeiströmende Medium Wärme von dem beheizten Widerstandsthermometer abtransportiert. Um also bei einem strömenden Medium die feste Temperaturdifferenz zwischen den beiden Widerstandsthermometern aufrecht zu erhalten, ist eine erhöhte Heizleistung für den beheizten Widerstandsthermometer erforderlich. Die erhöhte Heizleistung ist ein Maß für den Massedurchfluss bzw. den Massestrom des Mediums durch die Rohrleitung. Die Heizleistung kann durch einen sogenannten Leistungskoeffizienten PC beschrieben werden.

Wird hingegen eine konstante Heizleistung eingespeist, so verringert sich infolge des Durchflusses des Mediums die Temperaturdifferenz zwischen den beiden Widerstandsthermometern. Die jeweilige Temperaturdifferenz ist dann ein Mass für den Massedurchfluss des Mediums durch die Rohrleitung bzw. durch das Messrohr.

Es besteht somit ein funktionaler Zusammenhang zwischen der zum Beheizen des Widerstandsthermometers notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung, 't-switch', 't-trend' oder 't-mass' angeboten und vertrieben.

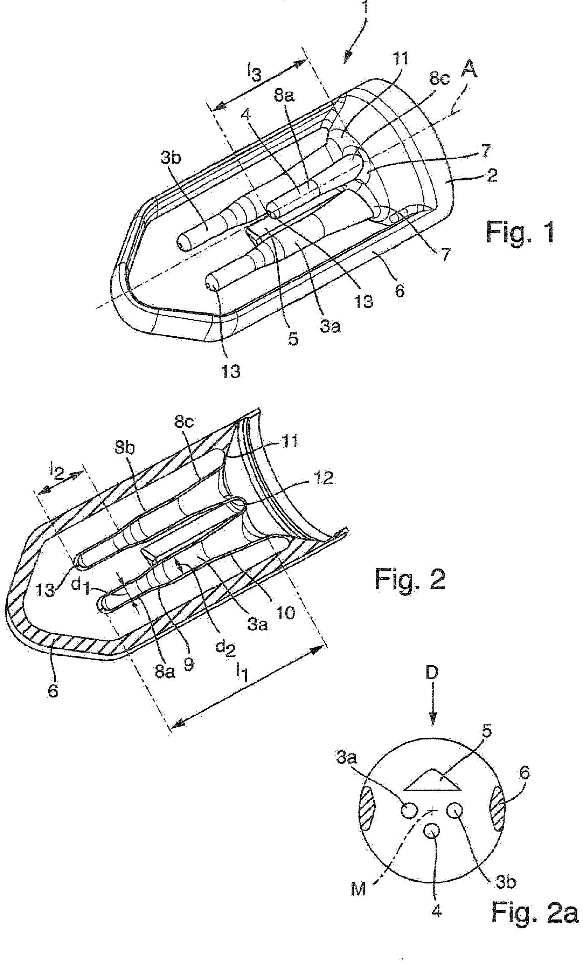

In Fig. 1 ist eine besondere Variante eines thermischen Durchflussmessgerätes näher dargestellt. Dabei erkennt man insbesondere das Gehäuse eines Messaufnehmers eines thermischen Durchflussmessgerätes, welches nachfolgend als Sensorgehäuse 1 bezeichnet wird. Dieses Gehäuse ist aus Metall und kann als Einstecksensor ausgebildet sein oder fest, ggf. mit einem Zwischenstück, an der Innenwandung eines Messrohres festgelegt sein.

Zusätzlich zum Messaufnehmer weist das thermische Durchflussmessgerät selbstverständlich auch eine Auswerteeinheit auf, welche jedoch aus Gründen der Übersichtlichkeit nicht näher dargestellt ist.

Das nachfolgend beschriebene Sensorgehäuse 1 eines Messaufnehmers stellt lediglich eine besonders bevorzugte Ausführungsvariante der Erfindung dar und ist keineswegs beschränkend für den Schutzumfang der vorliegenden Erfindung zu verstehen.

Das Sensorgehäuse 1 weist einen Hohlkörper 2 auf, welcher direkt oder durch ein Zwischenstück an einer Halterung einer Einsteckvorrichtung, z.B. einer Einsteckstange, oder an einem Messrohr festgelegt werden kann.

Der Hohlkörper 2 weist eine plattenförmige Grundfläche 11 auf, ausgehend von welcher zumindest zwei, eine erste und eine zweite, Stifthülsen 3a und 3b in das Lumen, also das Innere eines Rohres, beispielsweise des Messrohres, hineinragen.

Der Hohlkörper 2 ist in der Ausführungsvariante der Fig. 1 und 2 kegelstumpfförmig dargestellt. Er kann allerdings auch eine andere Form, z.B. zylindrisch oder pyramidenstumpfförmig, aufweisen.

In Fig. 1 und 2 sind insgesamt vier Stifthülsen dargestellt. Diese Variante ist bevorzugt, da mit dieser Gehäuseform mehrere Funktionalitäten, z.B. Drifterkennung und Richtungserkennung, in einem thermischen Durchflussmessgerät vorteilhaft konstruktiv vereinigt werden können.

Zugleich zeigt die Ausführungsvariante der Fig. 1 und 2, dass im Rahmen der vorliegenden Erfindung auch kompliziertere Sensorgehäusevarianten realisierbar sind.

Die vorliegende Erfindung kann in einer vereinfachten Ausführungsvariante auch lediglich die zwei Stifthülsen 3a und 3b aufweisen. Die Stifthülsen sind vorzugsweise mit dem Hohlkörper einstückig und verbindungsnahtfrei, insbesondere im Verbindungsbereich 12, verbunden. Als Verbindungsnaht im Sinne der vorliegenden Erfindung ist eine Schweißnaht, Klebenaht, Lötnaht und dergleichen zu verstehen. Besonders bevorzugt sind ist das Gehäuse, also die Gesamtheit aus Stifthülsen und Hohlkörper, monolithisch ausgebildet.

Die erste und zweite Stifthülse 3a, 3b weisen jeweils eine mediumsberührende Stirnfläche 13 auf. Diese ist in Fig. 1 und 2 gewölbt, kann allerdings auch eben ausgebildet sein.

Die Stifthülsen 3a und 3b können jeweils gestuft ausgebildet sein, wodurch ein besseres Einführen und Positionieren eines Heizelements und/oder eines Temperatursensors in der Stifthülse durch die endständige Öffnung auf der mediumsabgewandten Seite der Stifthülse erfolgen kann.

Die geometrische Ausgestaltung einer jeweiligen Stifthülse 3a oder 3b ist dergestalt, dass ausgehend von der Stirnfläche 13 zunächst ein erster Abschnitt 8a mit zylindrischer Stifthülsenwandung und einem ersten kontinuierlichen Zylindermanteldurchmesser d1 folgt. Sodann folgt ein zweiter Abschnitt 8b mit einer zylindrischen Stifthülsenwandung und einem zweiten kontinuierlichen Zylindermanteldurchmesser d2. Der Übergangsbereich zwischen dem ersten und dem zweiten Abschnitt 8a und 8b ist nicht abrupt, sondern weist ein kontinuierliches Anwachsen des Durchmessers vom ersten Durchmesser d1 auf einen zweiten Durchmesser d2 auf. Es handelt sich bei einer entsprechenden Stufung 9 daher nicht um einen abrupten sondern einen allmählichen Wechsel des Durchmessers. Sodann geht die Stifthülse in einem Übergangsbereich 10 in einen dritten Abschnitt 8c über, welcher kegelstumpfförmig ausgebildet ist und bei welchem der Durchmesser d allmählich im Verlauf des Kegelstumpfs bis zu einem Übergangsbereich 7 zum Hohlkörper 2 allmählich anwächst. Die Stifthülsen 3a und 3b weisen eine Länge l1 von zumindest 10 mm aufweisen.

Dem Abschnitt 8a ist gemäß der Definition der vorliegenden Erfindung die Stirnfläche 13 zugeordnet. In diesem Abschnitt 8a eines ersten der beiden Stifthülsen 3a und 3b ist ein nicht näher dargestelltes Heizelement bzw. ein Heizer angeordnet. Dies kann z.B. auch ein beheizbares Widerstandsthermometer sein. Das Heizelement muss nicht zwingend an der Stirnfläche oder Zylindermantelfläche der Stifthülse anliegen sondern kann vorzugsweise über eine Kupferbrücke mit der Wandung der Stifthülse thermisch gekoppelt sein. Gleiches gilt auch für die weiteren optionalen Stifthülsen. Eine entsprechende Anordnung und deren Vorteile sind in der DE 10 2008 015 359 A1 im Detail beschrieben.

Im Abschnitt 8a eines zweiten der beiden Stifthülsen 3a und 3b ist Temperatursensor zur Ermittlung der Mediumstemperatur angeordnet. Dieser kann ebenfalls als beheizbares Widerstandsthermometer ausgebildet sein, wobei im Betrieb des thermischen Durchflussmessgerätes vorzugsweise jeweils eines der Widerstandsthermometer aktiv beheizt und eines der Widerstandsthermometer unbeheizt betrieben werden kann.

Die Wandstärke der Stifthülsen 3a und 3b beträgt zumindest im Abschnitt 8a weniger als 0,5 mm, vorzugsweise weniger oder gleich als 0,4 mm, insbesondere 0,1 bis 0,4 mm. Aufgrund der dünnen Wandstärke kann ein besonders günstiger Wärmeübergang erreicht werden.

Die Länge l2 dieses Abschnitts 8a kann zumindest 2 mm, vorzugsweise jedoch 3-10 mm betragen.

Das Verhältnis der Länge l2 zum Durchmesser d1 ist für den ersten Abschnitt 8a vorzugsweise größer als 5, besonders bevorzugt gleich oder größer als 7.

In einer bevorzugten Ausführungsvariante der Erfindung beträgt das durchschnittliche Verhältnis l1/d_{Mittelwert} für die gesamte Stifthülse vorzugsweise größer als 4, wobei sich der Durchmesser immer auf die jeweilige Länge des Abschnitts der Stifthülse bezieht, in welchem der Durchmesser tatsächlich vorhanden ist. Im Falle eines Kegelstumpfes, wie in Abschnitt 8c, kann eine Mittelwertbildung der Durchmesser erfolgen.

Das Gehäuse 2 ist aus Metall gefertigt. Als besonders bevorzugtes Metall kann Stahl genutzt werden. Alternativ kann, z.B. für stark-korrosive Medien, auch Titan als Wandungsmaterial genutzt werden.

Zusätzlich kann das Gehäuse sodann noch mit einer metallischen Außenbeschichtung versehen werden, um ggf. die Widerstandsfähigkeit gegenüber bestimmten Medien zu erhöhen. Diese Außenbeschichtung zählt gemäß der vorliegenden Erfindung jedoch nicht zum Gehäuse 2 sondern als zusätzlich auf das Gehäuse aufgebrachte Materiallage.

Abweichend von der vorbeschriebenen Grundform für ein thermisches Durchflussmessgerät weist die in Fig. 1 und 2 dargestellte Ausführungsvariante eine Strömungsstörung bzw. ein strömungsstörendes Element 5 auf, welche als Stifthülse oder als Massivelement ausgebildet sein kann, sowie eine ebenfalls dritte Stifthülse 4.

Die Strömungsstörung 5 weist gegenüber den ersten beiden Stifthülsen 3a und 3b zumindest in einem Endbereich mit einer Stirnfläche eine andere geometrische Querschnittsform auf. Insbesondere ist der Endbereich mit der Stirnfläche prismatisch ausgebildet. In der Ausführungsvariante der Fig. 1 und 2 ist die Querschnittsform als ein Dreieck ausgebildet. Die Strömungsstörung 5 ist in der dargestellten ersten Strömungsrichtung D vor der dritten Stifthülse 5 angeordnet.

Die erste und die zweite Sensorhülse bilden eine gemeinsame Verbindungsachse aus. Die erste Strömungsrichtung D ist derart definiert, dass sie in einem Winkel von 80-100° zu der Verbindungsachse, auf einer Ebene die senkrecht zu den Längsachsen der beiden vorgenannten Sensorhülsen verläuft und auf der die Verbindungsachse liegt, angeordnet ist. Das Messmedium in der ersten Strömungsrichtung trifft zunächst auf das Strömungshindernis 4. Das dritte Sensorelement 5 liegt teilweise oder vollständig im Strömungsschatten dieses Strömungshindernisses 4.

Je nach Positionierung des Sensors in der Mediumsströmung kann es anstatt der ersten Strömungsrichtung D auch eine zweite in den Figuren nicht dargestellte Strömungsrichtung geben, welche zur ersten Strömungsrichtung D entgegengesetzt ist. In dieser Strömungsrichtung wird die dritte Stifthülse direkt angeströmt.

Die derart angeordnete dritte Stifthülse 5, welche ebenfalls einen Heizer aufweist, kann zur Richtungserkennung genutzt werden.

Das allgemeine Verfahren zur Strömungsrichtungserkennung ist in den Druckschriften DE 10 2009 045 956 A1 und DE 10 2010 040 285 A1 beschrieben, auf welche im Rahmen der vorliegenden Erfindung vollumfänglich Bezug genommen wird.

Es erfolgt dabei die Ermittlung eines Entscheidungskoeffizienten DC auf Grundlage zweier Leistungskoeffizienten bzw. Powerkoeffizienten PC1 und PC2. Im vorliegenden Fall bezieht sich ein Leistungskoeffizient PC1 auf den Heizer in einer der Stifthülsen 3a oder 3b und ein zweiter Leistungskoeffizient auf den Heizer in der dritten Stifthülse 4. Der Entscheidungskoeffizient ermittelt sich wie folgt DC= (PC2-PC1)/PC2. Durch Abgleich des Entscheidungskoeffizienten mit einem Grenzwert kann sodann entschieden werden, von welcher Richtung die Strömung D durch ein Rohr bzw. Messrohr fließt. Es ist klar, dass der Leistungskoeffizient des Heizers der dritten Stifthülse sich ändern wird, je nachdem ob sich die Stifthülse im Strömungsschatten des Strömungshindernisses 5 aufhält oder ob sie direkt angeströmt wird.

Wie man aus Fig. 1 und 2 erkennt, weist die dritte Stifthülse 4 eine geringere Gesamtlänge l3 gegenüber der Gesamtlänge der ersten und zweiten Hülsen 3a und 3b auf. Die Hülse weist, analog zu den Stifthülse 3a, 3b eine Stirnfläche 13 auf, welche einem ersten zylindrischen Abschnitt 8a der Stifthülse 4 zugeordnet ist. An diesen ersten Abschnitt schließt sich ein dritter Abschnitt 8c an, welcher analog zu den Hülsen 3a und 3b kegelförmig ausgebildet ist. Ein zweiter zylinderischer Abschnitt 8b fehlt bei dieser Stifthülse. In dieser kürzeren vierten Stifthülse 4 ist ebenfalls ein Heizer, z.B. ein beheizbares Widerstandsthermometer, angeordnet. Zudem weist das Strömungshindernis 5 auch eine geringere Gesamtlänge l3 auf als die Gesamtlänge l1 der ersten und der zweiten Stifthülse 3a und 3b. Durch die unterschiedlichen Ebenen senkrecht zu den Längsachsen der Stifthülsen auf welchem die Heizer angeordnet sind, wird die Durchflussmessung durch die Richtungserkennung nicht beeinflusst.

Es ist verständlich, dass die kürzere dritte Stifthülse 4 auch einen anderen Anschmutzungsgrad aufweist. Daher kann auch durch Verhältnisbildung z.B. der Leistungskoeffizienten des Heizers in der ersten oder zweiten Stifthülse 3a, 3b mit dem Heizer in der dritten Stifthülse 4 eine Einschätzung des Sensordrifts über die Betriebszeit des thermischen Durchflussmessgerätes getroffen werden. Ggf. kann eine Quantifizierung des Sensordrifts erfolgen und besonders bevorzugt Kompensation des Sensordrifts bei der Durchflussmessung erfolgen.

Sofern das Strömungshindernis 5 als Sensorhülse genutzt wird, so kann auch in dieser Sensorhülse ein Heizer bzw. ein Heizelement, vorzugsweise ein beheizbares Widerstandsthermometer, eingesetzt werden. Bereits aufgrund der unterschiedlichen geometrischen Form ist ein anderes Anschmutzungsverhalten dieser Stifthülse zu erwarten und damit ein anderer Sensordrift im Verlauf der Betriebsdauer des thermischen Durchflussmessgeräts. Beispielsweise durch Differenzbildung der Leistungskoeffizienten der verschiedenen Heizelemente kann verglichen werden, um wieviel Prozent die Differenzen während des Messbetriebes ändern, so dass ein Sensordrift noch zuverlässiger detektierbar und kompensierbar ist.

Erfindungsgemäß weist das Gehäuse 1 einen Bügel 6 aufweisen, welcher die Anordnung der ersten und der zweiten Stifthülse 3a, 3b, der optionalen vierten Stifthülse 4 und des stiftförmige Element 5 bogenförmig überspannt und mit dem Hohlkörper 2 vorzugsweise ebenfalls monolithisch und nahtfrei verbunden ist. Dieser Bügel dient vorzugsweise als strömungsführendes Element.

Ein monolithisches Sensorgehäuse mit zumindest zwei entsprechend langen dünnwandigen Stifthülsen ist zudem eine fertigungstechnische Herausforderung. Mittels Feinguss sind entsprechende Strukturen in kosten- und zeitintensiver Weise fertigbar. Die verwendeten Metallmaterialien müssen zudem auch für den Guss geeigneten sein. Für einen gelungenen Feinguss müssen u.a. viele Aspekte wie die Abkühlungsgeschwindigkeit und ggf. Nachbearbeitungsschritte zur Oberflächenbearbeitung beachtet werden. Ähnliche Nachteile treten auch bei Urformverfahren, z.B. dem sogenannten Metal Injection Molding auf, welches grundsätzlich auch im Rahmen der Erfindung zur Herstellung des Sensorgehäuses genutzt werden kann. Der besondere Vorteil des MIM-Verfahrens ist eine vergleichsweise hohe Fertigungsgeschwindigkeit.

Besonders bevorzugt sind generative Fertigungsverfahren, wie Strahlschmelzverfahren. wie z.B. das selektives Laserschmelzen, welches auch als SLM-Verfahren bekannt ist, um einen derartigen Gegenstand mit entsprechend-dünner Wandstärke und entsprechender Länge der Stifthülsen zu fertigen.

Beim SLM-Verfahren kann ein Metallpulver in einer dünnen Schicht auf eine Oberfläche aufgebracht werden. Das Metallpulver wird sodann durch Laserstrahlung lokal vollständig geschmolzen und erstarrt zu einer festen Materialschicht in einer Schichtdicke von typischerweise 15-150 µm. Sodann wird die Oberfläche um den Betrag der Schichtdicke abgesenkt und eine neue Materialschicht aufgetragen. Auf diese Weise bildet sich allmählich das Gehäuse 1 des Messaufnehmers heraus. Materialspannungen und korrosionsanfällige Nahtstellen sind dabei nicht vorhanden.

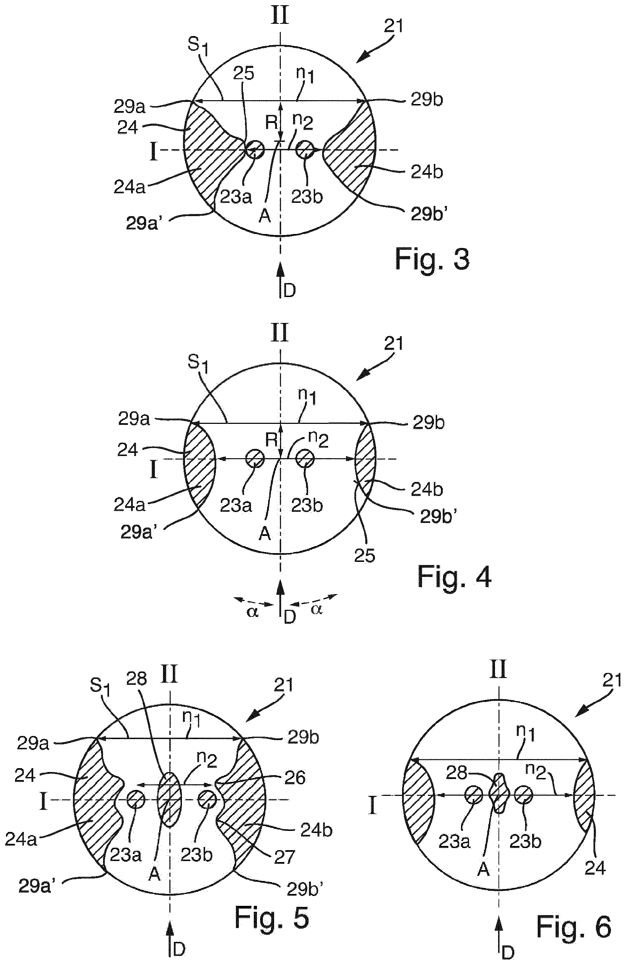

Die Ausführungsbeispiele der Fig. 3-9 zeigen unterschiedliche Ausgestaltungen des erfindungsgemäßen thermischen Durchflussmessgerätes mit verschiedenen Bügelvarianten.

In Fig. 3-6 sind vier unterschiedliche Sensorgehäusevarianten 20a - 20 als Schnittbild senkrecht zu einer Sensorachse A dargestellt. Man erkennt stets die Querschnitte der beiden Stifthülsen 23a und 23b, von welchen jeweils eine Stifthülse mit einem Heizer und die zweite Stifthülse mit einem Temperatursensor zur Ermittlung der Mediumstemperatur versehen ist. Selbstverständlich kann das Sensorgehäuse weitere Stifthülsen oder Strömungshindernisse zur Richtungs- und/oder Sensordrifterkennung aufweisen. Diese sind jedoch im vorliegenden Anwendungsbeispiel aus Gründen der Übersichtlichkeit nicht näher dargestellt.

In Fig. 3 ist der Bügel 24 bzw. die parallel zu den Stifthülsen verlaufenden länglichen Elemente 24a, 24b des Bügels 24 dargestellt. Die Verbindungsachse I zwischen den beiden Stifthülsen 23a und 23b ist in Fig. 3 ebenfalls dargestellt, sowie eine Achse II, welche senkrecht zu der besagten Verbindungsachse entlang der Schnittbildes der Fig. 3 verläuft. Der Querschnitt eines jeden der länglichen Elemente 24a, 24b weist einen Anfangs- und einen Endpunkt 29a, 29a', 29b, 29b' auf. Eine Verbindungslinie S1 der Anfangspunkte 29a, 29b der beiden länglichen Elemente 24a und 24b verläuft parallel zur Verbindungsachse I und weist den größtmöglichen Abstand R einer Verbindungslinie zwischen zwei Punkten der zwei länglichen Elemente auf der Achse II auf.

Der Abstand der jeweiligen Anfangspunkte, oder alternativ der Endpunkte, entlang der Verbindungslinie S1 definiert einen Abstand n1. Durch Parallelverschiebung der Verbindungslinie S1 in Richtung der Sensorachse A nimmt der Abstand n der Punkte ab, welche auf dem Umriss bzw. der Kontur der beiden länglichen Elemente 24a und 24b gegenüberliegen und welche auf einer entsprechend parallelverschobenen Verbindungslinie angeordnet sind.

Vereinfacht ausgedrückt verringert sich der Abstand der länglichen Elemente 24a und 24b des Bügels 24 zur Verbindungsachse I der Stifthülsen hin, bis zum Erreichen eines Minimalabstandes n2 zweier Punkte 25, von denen jeweils ein Punkt 25 auf einem länglichen Element 24a oder 24b angeordnet sind. Diese Punkte 25 sind die zueinander am nächsten gelegenen Punkte der beiden länglichen Elemente

Dieser Minimalabstand n2 liegt in Fig. 3, 4 und 6 auf der Verbindungsachse I. In Fig. 5 sind zwei Minimalabstände n2 dargestellt, deren Verbindungslinie im gleichen Abstand von der Verbindungsachse I entfernt sind.

Diese Ausgestaltung dient der Strömungsfassung bzw. zur Strömungsführung zur Sensormitte, also zu den beiden Stifthülsen hin. Üblicherweise sollte ein thermisches Durchflussmessgerät so in ein Rohr eingebaut werden, dass die Strömung des Messmediums im Winkel von 90° zur Verbindungsachse I steht. Allerdings kann dies nicht immer gewährleistet werden. Es kann vorkommen, dass die Strömungsrichtung auch um einen gewissen Winkelversatz gegenüber der 90°-Konfiguration auf das Sensorgehäuse trifft. Dieser Winkelversatz ist mit α in Fig. 4 schematisch angedeutet. Üblicherweise unterliegt die Durchflussmessung des thermischen Durchflussmessgerätes bei Auftreten eines Winkelversatzes einem Messfehler. Dies wird oftmals auch als Drehwinkelempfindlichkeit des thermischen Durchflusssensors bezeichnet. Aufgrund der dargestellten Strömungsführung wird jedoch die Drehwinkelempfindlichkeit deutlich herabgesetzt, so dass der Messfehler bei einer Strömung mit einem Winkelversatz gegenüber der 90°-Konfiguration von zumindest ±7 Grad deutlich verringert werden kann.

Wie aus Fig. 3-6 ersichtlich, weisen die Sensorelemente zwei Symmetrieebenen auf, wobei eine erste Symmetrieebene durch die Verbindungsachse I und die Sensorachse A aufgespannt wird und wobei die zweite Symmetrieebene durch die Achse II und die Sensorachse A aufgespannt wird.

Dadurch ist die Einbaulage des Sensors an einem Rohr unabhängig davon ob das Medium in Strömungsrichtung D oder entgegen dieser Strömungsrichtung durch das Rohr fließt. Zudem braucht der Sensor bei dessen Kalibration nur von einer Richtung kalibriert werden.

Die länglichen Elemente 24a und 24b können in einer weniger bevorzugten Ausführungsvariante der Erfindung, wie in Fig. 3-6 angeordnet sein, jedoch nicht endständig in Form eines Bügels miteinander verbunden sein.

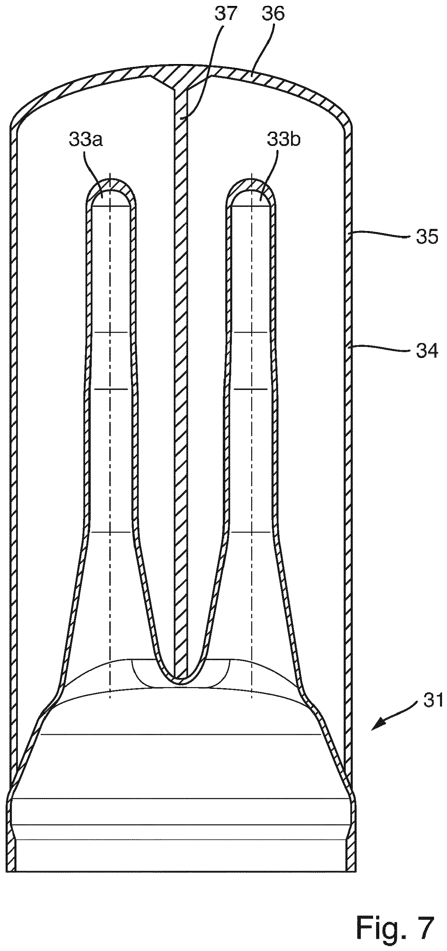

Analog zu Fig. 1-2 sind in den Fig. 7-9 Varianten eines Sensorgehäuses 31 dargestellt. Diese weisen einen Bügel 34 mit einem Verbindungsstück 36 auf, welches zwei längliche Elemente 35 zu einem Bügel 34 verbindet, welcher zwei Stifthülsen 33a und 33b überspannt. Dadurch wird der Sensor robuster gegenüber Vibrationen z.B. im eingebauten Zustand im Rohr.

Die in Fig. 7-9 dargestellten länglichen Elemente 35 sind nur schematisch dargestellt. Der Querschnitt senkrecht zur Sensorachse A eines jeweiligen länglichen Elements 35 der Fig. 7-9 kann vorteilhaft aus den in Fig. 3-6 dargestellten Varianten ausgewählt werden.

Fig. 5 und 6 weisen jeweils einen Mittelsteg 28 auf, welcher in Fig. 5 einen elliptischen Querschnitt aufweist. In Fig. 5 und 6 nimmt der Querschnitt des Mittelsteges in Richtung der Sensorachse A hin zu. Der maximale Querschnitt muss jedoch nicht zwingend auf der Verbindungsachse I liegen, sondern es können jeweils zwei maximale Querschnittslängen für den Mittelsteg 28 vorgesehen sein, welche im gleichen Abstand und parallel zur Verbindungsachse I angeordnet sind.

Entsprechend ist der vorgenannte Mittelsteg 28 der Fig. 5 und 6 schematisch in Fig. 7 als Mittelsteg 37 dargestellt. Durch den Mittelsteg erfolgt ebenfalls eine verbesserte Strömungsführung. Das Sensorgehäuse ist zudem noch robuster gegenüber Vibrationen und die Tendenz zu Verstopfungen zwischen den Stifthülsen wird verringert.

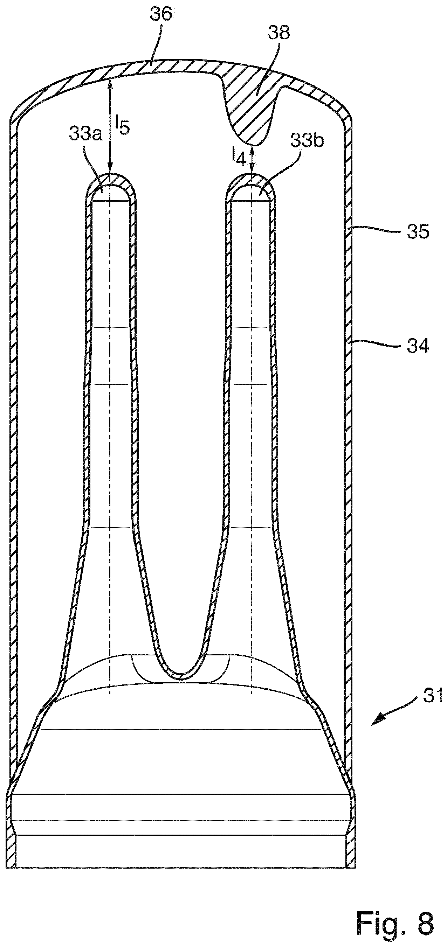

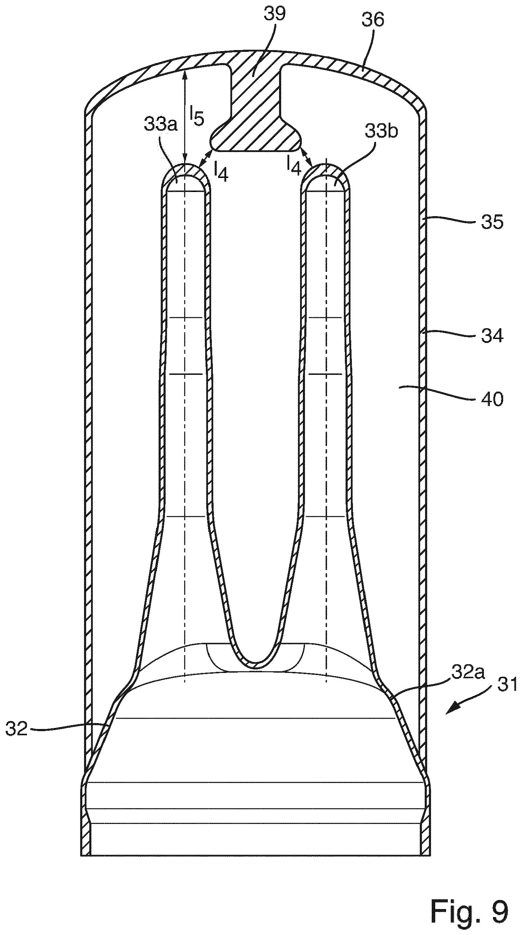

In Fig. 8 und Fig. 9 ist jeweils ein Vorsprung 38, 39 vorgesehen.

In Fig. 8 weist dieser Vorsprung 38 weist zur Stirnfläche der Stifthülse 33b einen minimalen Abstand l4 auf, welcher geringer ist als der Abstand l2 der Stirnfläche zum Verbindungsstück 36 des Bügels 34 in Verlängerung der Stifthülsenachse. Vorzugsweise ist der Abstand l4 zumindest um 20%, vorzugsweise um 50% geringer als der Abstand l5. Die Stifthülse 33b ist dabei die Stifthülse, welche mit dem Heizer versehen ist.

In Fig. 9 ist ein symmetrischer Vorsprung 39 dargestellt. Dieser definiert jeweils einen minimalen Abstand l4 zu einer jeweiligen Stirnfläche einer Stifthülse 33a und 33b, welcher geringer ist als der Abstand l5 der Stirnfläche zum Verbindungsstück 36 des Bügels 34 in Verlängerung der Stifthülsenachse. Vorzugsweise ist der Abstand l4 zumindest um 20%, vorzugsweise um 50% geringer als der Abstand l5.

Beide Vorsprünge bei einer Anordnung des thermischen Durchflussmessgerätes in einem Rohr entgegen der Richtung des Gravitationsfeldes ausgerichtet und dienen der Ableitung von Flüssigkeitstropfen, welche sich z.B. bei Gas- und/oder Dampfmessungen an den Stifthülsen bilden können. Diese könne aufgrund der geringen Länge l4 auf den jeweiligen Vorsprung 38 überspringen bzw. übergeleitet werden und schließlich abgeleitet werden. Dadurch wird ein Messfehler durch Tropfen an den Stifthülsen verhindert.

In der in Fig. 8 dargestellten bevorzugten Ausführungsvariante ist der Vorsprung von den Stifthülsen beabstandet. Besonders bevorzugt kann der Abstand des Vorsprungs in dieser bevorzugten Ausführungsvariante zu den Stifthülsen geringer als 20% der Länge einer Stifthülse sein und insbesondere geringer als 10% der Länge der Stifthülse sein.

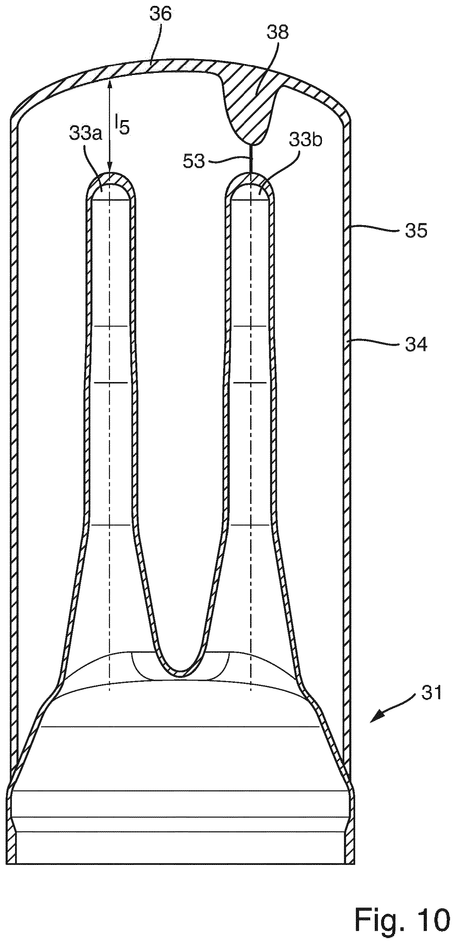

In einer weiteren bevorzugten Ausführungsvariante kann zwischen dem Vorsprung und der Stifthülse ein Überbrückungselement angeordnet sein, welches den Vorsprung mit der Stifthülse verbindet. Dies ist in Fig. 10 dargestellt.

Fig. 10 zeigt eine im Rahmen der Erfindung abgewandelte Ausführungsvariante der Fig. 8. Dabei ist zwischen dem Vorsprung 38 und der Stifthülse 33b ein Überbrückungselement 53 angeordnet.

Vorsprung, Überbrückungselement und Stifthülse können als Bestandteile eines monolithischen Sensorgehäuses oder eines Sensorgehäusebauteils ausgebildet sein und besonders bevorzugt nahtlos miteinander verbunden sein. Das Überbrückungselement 53 hat dabei eine sehr kleine Kontaktfläche mit der Stifthülse, welche vorzugsweise weniger als 1/5, besonders bevorzugt weniger als 1/10 der Stirnfläche der Stifthülse entspricht.

Das Überbrückungselement 53 kann beispielsweise ein Draht sein. Es dient zur zusätzlichen Ableitung der Tropfen.

### Bezugszeichenliste

- 1: Sensorgehäuse
- 2: Hohlkörper
- 3a, 3b: erste und zweite Stifthülse
- 4: dritte Stifthülse
- 5: Strömungsstörung
- 6: Bügel
- 7: Übergangsbereich
- 8a, 8b, 8c: erster, zweiter und dritter Abschnitt
- 9: Stufung
- 10: Übergangsbereich
- 11: Grundfläche
- 12: Übergangsbereich
- 13: Stirnfläche

- 21: Sensorgehäuse
- 23a, b: Stifthülsen
- 24: Bügel
- 24a, b: längliche Elemente
- 25: Punkte auch einem länglichen Element 24a oder 24b
- 28: Mittelsteg
- 29a, 29a': End- und Anfangspunkte des länglichen Elements 24a
- 29b, 29b': End- und Anfangspunkte des länglichen Elements 24b

- 31: Sensorgehäuse
- 33a, b: Stifthülsen
- 34: Bügel
- 35: längliche Elemente
- 36: Verbindungsstück
- 37: Mittelsteg
- 38: Vorsprung
- 39: Vorsprung

- 53: Überbrückungselement
- d1: erster Durchmesser
- d2: zweiter Durchmesser

- l1: Gesamtlänge der ersten oder zweiten Stifthülse
- l2: Länge des endständigen Abschnitts
- l3: Länge der dritten Stifthülse
- l4: Abstand zwischen Vorsprung und Stirnfläche der Stifthülse
- l5: Abstand zwischen Verbindungsstück des Bügels und Stirnfläche der Stifthülse

- A: Langsachse des Sensorgehäuses
- D: Strömungsrichtung

- I: Verbindungsachse zwischen den beiden Stifthülsen
- II: Achse senkrecht zur Verbindungsachse und zur Längsachse des Sensorgehäuses

- S1: Verbindungslinie zwischen zwei Anfangs- oder zwischen zwei Endpunkten
- R: größtmöglicher Abstand einer Verbindungslinie zur Verbindungsachse A

- n1: Abstand zwischen zwei Punkten auf einer Verbindungslinie parallel zur Verbindungsachse A
- n2: Minimalabstand

- α: Winkelversatz

## Patentansprüche

1. Thermisches Durchflussmessgerät umfassend einen Sensor mit einem metallischen Sensorgehäuse (1, 21, 31), welches einen Hohlkörper (2) zum Anschluss an eine Einsteckvorrichtung und/oder eine Rohrwandung und eine Sensorachse (A) aufweist, wobei der Hohlkörper (2) eine Grundfläche (11) aufweist,
wobei das Sensorgehäuse (1, 21, 31) zumindest eine erste und eine zweite Stifthülse (3a, 3b, 23a, 23b, 33a, 33b) aufweist, welche ausgehend von der Grundfläche (11) hervorstehen,
wobei die erste und die zweite Stifthülse (3a, 3b, 23a, 23b, 33a, 33b) eine Verbindungsachse (I) und einen Mittelpunkt zwischen den beiden Stifthülsen (3a, 3b, 23a, 23b, 33a, 33b) definieren,
wobei in einer ersten der beiden Stifthülsen (3a, 3b, 23a, 23b, 33a, 33b) ein erster Heizer und in einer zweiten der beiden Stifthülsen (3a, 3b, 23a, 23b, 33a, 33b) ein Temperatursensor zur Ermittlung einer Mediumstemperatur vorgesehen ist,
wobei das Sensorgehäuse (1, 21, 31) zumindest zwei längliche Elemente (24a, 24b, 35) mit zumindest derselben Länge (l1) wie die Stifthülsen aufweist, welche ausgehend vom Hohlkörper (2) parallel zu den beiden Stifthülsen (3a, 3b, 23a, 23b, 33a, 33b) verlaufen, wobei auf einer Schnittebene senkrecht zur Sensorachse (A) eine weitere Achse (II) verläuft, welche senkrecht zur Verbindungsachse (I) angeordnet ist;
wobei das Sensorgehäuse (1, 21, 31) auf der Schnittebene zwei spiegelsymmetrische Ebenen aufweist, welche senkrecht zueinander und senkrecht zur Schnittebene angeordnet sind, wobei eine erste Ebene durch die Verbindungsachse (I) und die Sensorachse (A) aufgespannt wird und wobei eine zweite Ebene durch die weitere Achse (II) und die Sensorachse (A) aufgespannt wird, wobei genau zwei längliche Elemente (24a, 24b, 35) der mindestens zwei länglichen Elemente (24a, 24b, 35) jeweils in entgegengesetzter Richtung zum Mittelpunkt auf der Verbindungsachse (I) angeordnet sind und einen größeren Abstand zum Mittelpunkt der beiden Stifthülsen (3a, 3b, 23a, 23b, 33a, 33b) aufweisen als die jeweilige Stifthülse (3a, 3b, 23a, 23b, 33a, 33b);
**dadurch gekennzeichnet, dass** sich der Abstand (n1, n2) der zwei länglichen Elemente (24a, 24b, 35) zumindest bereichsweise in ihrem Verlauf parallel zu der weiteren Achse (II) zur Verbindungsachse (I) hin verringert.

2. Thermisches Durchflussmessgerät nach Anspruch 1, **dadurch gekennzeichnet, dass** der Abstand (n1) zweier Anfangspunkte (29a, 29b) der beiden länglichen Elemente (24a, 24b, 35) auf einer zur Verbindungsachse (I) parallel verlaufenden Verbindungslinie (S1), zumindest 30% oder 50%-120% größer ist als der Minimalabstand (n2) zweier Punkte (25) der länglichen Elemente (24a, 24b, 35).

3. Thermisches Durchflussmessgerät nach dem vorhergehenden Anspruch, **dadurch gekennzeichnet, dass** die zwei Punkte (25), welche den Minimalabstand (n2) definieren, auf der Verbindungsachse (I) angeordnet sind.

4. Thermisches Durchflussmessgerät nach einem der vorhergehenden Ansprüche, **dadurch gekennzeichnet, dass** die länglichen Elemente (24a, 24b, 35) über ein Verbindungselement (36) miteinander verbunden sind.

5. Thermisches Durchflussmessgerät nach Anspruch 4, **dadurch gekennzeichnet, dass** die Gesamtheit aus den zumindest zwei länglichen Elementen (24a, 24b, 35) und dem Verbindungselement (36) einen Bügel (6, 24, 34) ausbilden, welcher die beiden Stifthülsen (3a, 3b, 23a, 23b, 33a, 33b) überbrückt.

6. Thermisches Durchflussmessgerät nach Anspruch 5, **dadurch gekennzeichnet, dass** das Verbindungselement (36) einen Vorsprung (38, 39) aufweist, zur Ableitung von Tröpfchen von der Oberfläche der Stifthülse (3a, 3b, 23a, 23b, 33a, 33b).

7. Thermisches Durchflussmessgerät nach Anspruch 5, **dadurch gekennzeichnet, dass** das Verbindungselement (36) einen Vorsprung (38, 39) aufweist, zur Ableitung von Tröpfchen von einer Stirnfläche der Stifthülse (3a, 3b, 23a, 23b, 33a, 33b).

8. Thermisches Durchflussmessgerät nach einem der vorhergehenden Ansprüche, **dadurch gekennzeichnet, dass** das längliche Element (24a, 24b, 35) in einem Abstand von der nächstgelegenen Stifthülse (3a, 3b, 23a, 23b, 33a, 33b) beabstandet ist, welcher zumindest 10% des Abstandes der Stifthülsen (3a, 3b, 23a, 23b, 33a, 33b) voneinander entspricht.

9. Thermisches Durchflussmessgerät nach einem der vorhergehenden Ansprüche, **dadurch gekennzeichnet, dass** das Sensorgehäuse (1) ein Strömungshindernis (5) und eine dritte Stifthülse (4) mit einem zweiten Heizer aufweist, welche derart angeordnet sind, dass eine Richtungserkennung des Messmediums erfolgen kann.

10. Anordnung umfassend ein thermisches Durchflussmessgerät nach einem der vorhergehenden Ansprüche und ein Rohr, welches dazu eingerichtet ist, von einem Messmedium in einer ersten Strömungsrichtung (D) durchflossen zu werden, wobei das Sensorgehäuse (1, 21, 31) des thermischen Durchflussmessgerätes im Rohr angeordnet ist und wobei das thermische Durchflussmessgerät eine Auswerteeinrichtung aufweist, welche ausgerüstet ist zum Erfassen des Durchfluss des Messmediums in der ersten Strömungsrichtung (D) und in einer der ersten Strömungsrichtung (D) entgegengesetzten zweiten Strömungsrichtung.

## Claims

1. Thermal flowmeter comprising a sensor with a metal sensor housing (1, 21, 31), said housing having a hollow body (2) to connect to a plug-in unit and/or a pipe wall and a sensor axis (A), wherein the hollow body (2) has a base surface (11), wherein the sensor housing (1, 21, 31) has at least a first and a second pin receptacle (3a, 3b, 23a, 23b, 33a, 33b), which project out of the base surface (11),
wherein the first and second pin receptacle (3a, 3b, 23a, 23b, 33a, 33b) define a connection axis (I) and a center point between the two pin receptacles (3a, 3b, 23a, 23b, 33a, 33b),
wherein a first heater element is provided in a first of the two pin receptacles (3a, 3b, 23a, 23b, 33a, 33b) and a temperature sensor to determine a medium temperature is provided in a second of the two pin receptacles (3a, 3b, 23a, 23b, 33a, 33b),
wherein the sensor housing (1, 21, 31) comprises at least two elongated elements (24a, 24b, 35) of at least the same length (l1) as the pin receptacles, said elongated elements extending from the hollow body (2) parallel to the two pin receptacles (3a, 3b, 23a, 23b, 33a, 33b),
wherein another axis (II) extends on a section plane perpendicular to the sensor axis (A) and is arranged perpendicular to the connection axis (I);
wherein, on the section plane, the sensor housing (1, 21, 31) has two symmetrically identical planes which are perpendicular to one another and perpendicular to the section plane, wherein a first plane is defined by the connection axis (I) and the sensor axis (A) and a second plane is defined by the other axis (II) and the sensor axis (A),
wherein exactly two elongated elements (24a, 24b, 35) of the at least two elongated elements (24a, 24b, 35) are each arranged in an opposite direction to the center point on the connection axis (I) and have a greater distance to the center point of the two pin receptacles (3a, 3b, 23a, 23b, 33a, 33b) than the respective pin receptacle (3a, 3b, 23a, 23b, 33a, 33b);
**characterized in that** the distance (n1, n2) between the two elongated elements (24a, 24b, 35) diminishes, at least in sections, in their course parallel to the other axis (II) in the direction of the connection axis (I).

2. Thermal flowmeter as claimed in Claim 1, **characterized in that** the distance (n1) between two initial points (29a, 29b) of the two elongated elements (24a, 24b, 35) on a connecting line (S1) parallel to the connection axis (I) is at least 30 % or 50 %-120 % greater than the minimum distance (n2) between two points (25) of the elongated elements (24a, 24b, 35).

3. Thermal flowmeter as claimed in the previous claim, **characterized in that** the two points (25), which define the minimum distance, are arranged on the connection axis (I).

4. Thermal flowmeter as claimed in one of the previous claims, **characterized in that** the elongated elements (24a, 24b, 35) are interconnected by means of a connection element (36).

5. Thermal flowmeter as claimed in Claim 4, **characterized in that** the total of the at least two elongated elements (24a, 24b, 35) and the connection element (36) form a bracket (6, 24, 34) which bridges the two pin receptacles (3a, 3b, 23a, 23b, 33a, 33b).

6. Thermal flowmeter as claimed in Claim 5, **characterized in that** the connection element (36) has a projection (38, 39) to drain droplets from the surface of the pin receptacle (3a, 3b, 23a, 23b, 33a, 33b).

7. Thermal flowmeter as claimed in Claim 5, **characterized in that** the connection element (36) has a projection (38, 39) to drain droplets from a front face of the pin receptacle (3a, 3b, 23a, 23b, 33a, 33b).

8. Thermal flowmeter as claimed in one of the previous claims, **characterized in that** the elongated element (24a, 24b, 35) is spaced at a distance from the nearest pin receptacle (3a, 3b, 23a, 23b, 33a, 33b) which corresponds to at least 10 % of the distance between the pin receptacles (3a, 3b, 23a, 23b, 33a, 33b).

9. Thermal flowmeter as claimed in one of the previous claims, **characterized in that** the sensor housing (1) comprises a flow obstacle (5) and a third pin receptacle (4) with a second heater element, which are arranged in such a way that it is possible to detect the direction of the medium under measurement.

10. Arrangement comprising a thermal flowmeter as claimed in one of the previous claims and a tube, wherein said arrangement is designed for a medium under measurement to flow through it in a first flow direction (D),
wherein the sensor housing (1, 21, 31) of the thermal flowmeter is arranged in the tube and the thermal flowmeter has an evaluation unit which is equipped to measure the flow of the medium under measurement in the first flow direction (D) and in a second flow direction that is opposite to the first flow direction (D).

## Revendications

1. Débitmètre thermique comprenant un capteur avec un boîtier de capteur métallique (1, 21, 31), lequel boîtier comporte un corps creux (2) pour le raccordement à un dispositif enfichable et/ou une paroi de tube et un axe de capteur (A), le corps creux (2) présentant une surface de base (11),
le boîtier de capteur (1, 21, 31) présentant au moins une première et une deuxième douille à broche (3a, 3b, 23a, 23b, 33a, 33b), lesquelles douilles font saillie de la surface de base (11),
la première et la deuxième douille à broche (3a, 3b, 23a, 23b, 33a, 33b) définissant un axe de liaison (I) et un point central entre les deux douilles à broche (3a, 3b, 23a, 23b, 33a, 33b),
un premier élément chauffant étant prévu dans une première des deux douilles à broche (3a, 3b, 23a, 23b, 33a, 33b) et un capteur de température pour déterminer une température du produit étant prévu dans une deuxième des deux douilles à broche (3a, 3b, 23a, 23b, 33a, 33b),
le boîtier de capteur (1, 21, 31) comprenant au moins deux éléments allongés (24a, 24b, 35) d'au moins la même longueur (l1) que les douilles à broche, lesquels éléments allongés s'étendent à partir du corps creux (2) parallèlement aux deux douilles à broche (3a, 3b, 23a, 23b, 33a, 33b),
un autre axe (II) s'étendant sur un plan de coupe perpendiculaire à l'axe du capteur (A) et étant disposé perpendiculairement à l'axe de liaison (I) ;
le boîtier de capteur (1, 21, 31) présentant sur le plan de coupe deux plans à symétrie spéculaire qui sont disposés perpendiculairement l'un à l'autre et perpendiculairement au plan de coupe, un premier plan étant défini par l'axe de liaison (I) et l'axe du capteur (A) et un deuxième plan étant défini par l'autre axe (II) et l'axe du capteur (A),
exactement deux éléments allongés (24a, 24b, 35) des au moins deux éléments allongés (24a, 24b, 35) étant chacun disposés dans la direction opposée au point central sur l'axe de liaison (I) et présentant une distance plus grande du point central des deux douilles à broche (3a, 3b, 23a, 23b, 33a, 33b) que la douille à broche (3a, 3b, 23a, 23b, 33a, 33b) respective ;
**caractérisé en ce que** la distance (n1, n2) entre les deux éléments allongés (24a, 24b, 35) diminue, au moins par zones, dans leur parcours parallèle à l'autre axe (II) en direction de l'axe de liaison (I).

2. Débitmètre thermique selon la revendication 1, **caractérisé en ce que** la distance (n1) entre deux points initiaux (29a, 29b) des deux éléments allongés (24a, 24b, 35) sur une ligne de liaison (S1) parallèle à l'axe de liaison (I) est supérieure d'au moins 30 % ou de 50 % à 120 % à la distance minimale (n2) entre deux points (25) des éléments allongés (24a, 24b, 35).

3. Débitmètre thermique selon la revendication précédente, **caractérisé en ce que** les deux points (25), lesquels définissent la distance minimale, sont disposés sur l'axe de liaison (I).

4. Débitmètre thermique selon l'une des revendications précédentes, **caractérisé en ce que** les éléments allongés (24a, 24b, 35) sont reliés entre eux par un élément de liaison (36).

5. Débitmètre thermique selon la revendication 4, **caractérisé en ce que** l'ensemble des au moins deux éléments allongés (24a, 24b, 35) et l'élément de liaison (36) forment un arceau (6, 24, 34) qui établit la jonction entre les deux douilles à broche (3a, 3b, 23a, 23b, 33a, 33b).

6. Débitmètre thermique selon la revendication 5, **caractérisé en ce que** l'élément de liaison (36) présente une saillie (38, 39) pour dévier les gouttelettes de la surface de la douille à broche (3a, 3b, 23a, 23b, 33a, 33b).

7. Débitmètre thermique selon la revendication 5, **caractérisé en ce que** l'élément de liaison (36) présente une saillie (38, 39) pour dévier les gouttelettes d'une face d'extrémité de la douille à broche (3a, 3b, 23a, 23b, 33a, 33b).

8. Débitmètre thermique selon l'une des revendications précédentes, **caractérisé en ce que** l'élément allongé (24a, 24b, 35) est espacé de la douille à broche la plus proche (3a, 3b, 23a, 23b, 33a, 33b) d'une distance égale à au moins 10 % de la distance entre les douilles à broche (3a, 3b, 23a, 23b, 33a, 33b).

9. Débitmètre thermique selon l'une des revendications précédentes, **caractérisé en ce que** le boîtier de capteur (1) comprend un obstacle à l'écoulement (5) et une troisième douille à broche (4) avec un deuxième élément chauffant, lesquels sont disposés de telle sorte qu'une détection du sens d'écoulement du produit mesuré puisse être effectuée.

10. Arrangement comprenant un débitmètre thermique selon l'une des revendications précédentes et un tube, lequel arrangement est conçu pour être parcouru par un produit mesuré dans un premier sens d'écoulement (D),
le boîtier de capteur (1, 21, 31) du débitmètre thermique étant disposé dans le tube et le débitmètre thermique comportant un dispositif d'exploitation, lequel dispositif est équipé pour détecter le débit du produit mesuré dans le premier sens d'écoulement (D) et dans un deuxième sens d'écoulement opposé au premier sens d'écoulement (D).
